# EUROPEAN PATENT APPLICATION

(11) **EP 0 570 199 A1**
(43) Date of publication of application: **18.11.1993**
(21) Application number: 93303646.9
(22) Date of filing: 11.05.1993
(51) Int. Cl.: C08F 10/02, C08F 2/34, C08F 4/646

(54) **Multistage polymerisation process**

(30) Priority: 15.05.1992 FR 9206245
(71) Applicant: BP Chemicals Limited, London EC2M 7BA (GB); BP CHEMICALS S.N.C., F-92400 Courbevoie (FR)
(72) Inventor: Jenny, Charles, BP Chemicals SNC, F-13117 Lavera (FR); Lalanne-Magne, Claudine, BP Chemicals SNC, F-13117 Lavera (FR)
(74) Representative: Hymers, Ronald Robson

(57) **Abstract**

The present invention relates to a multistage polymerisation process for producing ethylene polymers. The catalyst used is prepared by a process comprising : (a) contacting a magnesium chloride support (A) containing from 80 to 99.5 mol % of magnesium dichloride and from 20 % to 0.5 mol % of an electron-donor compound free from labile hydrogen (D), with at least one electron-donor compound containing labile hydrogen (B), (b) contacting the product of (a) with at least one organometallic compound (C), which is a reducing agent for titanium, (c) washing the product of (b) with a liquid hydrocarbon and (d) contacting the product of (c) with a solution of one or more titanium compounds in a liquid hydrocarbon.

## Description

The present invention relates to a multistage polymerisation process for producing ethylene polymers.

A process for producing ethylene polymers in the gas phase comprising two steps carried out in two consecutive reactors is disclosed in European Patent EP-A-192 427. According to this process the catalyst used can be chosen from a wide variety of catalysts of the Ziegler-Natta type. When this process is used with a catalyst of the Ziegler-Natta type essentially comprising magnesium, chlorine and titanium atoms, a formation of fine polymer particles can be observed, in particular in the first reactor. This formation of fine polymer particles becomes troublesome in particular when the polymer produced in the first reactor has a high melt index. These fines particles can form polymer agglomerates which can make it neccessary to stop the production process. Furthermore fine polymer particles can be entrained by the gas leaving the polymerisation reactor an may cause blockages in the recycle lines.

A multistage polymerisation process has now been found for producing ethylene polymers comprising two or more steps carried out in consecutive reactors which makes it possible, to overcome or at least mitigate the problem associated with the known process. This process appreciably reduces the tendency to form fine polymer particles when a polymer having a high melt index is produced i.e. a polymer having a melt index (M.I._{2.16}) measured at 190°C under a load of 2.16 kg higher than 10 g/10 minutes. Furthermore, one of the advantages of the process consists of a very low rate of formation of ethane, even when the catalyst employed is used in the presence of a large quantity of hydrogen.

The subject of the present invention is therefore a multistage polymerisation process for producing ethylene polymers, performed in two or more consecutive polymerisation reactors, with the aid of a catalyst system of the Ziegler-Natta type comprising a catalyst and a cocatalyst, characterised in that the catalyst used is prepared by a process comprising :
(a) contacting a magnesium chloride support (A) with at least one electron-donor compound containing labile hydrogen (B), the magnesium chloride support containing from 80 to 99.5 mol % of magnesium dichloride and from 20 % to 0.5 mol % of an electron-donor compound free from labile hydrogen (D) and being in the form of spheroidal particles with a weight-average diameter Dₘ of 10 to 100 microns and a particle size distribution such that the ratio of Dₘ, to the number-average diameter Dₙ, of the particles is lower than 3,
(b) contacting the product of (a) with at least one organometallic compound (C), which is a reducing agent for titanium,
(c) washing the product of (b) with a liquid hydrocarbon and,
(d) contacting the product of (c) with a solution of one or more titanium compounds in a liquid hydrocarbon.

According to the present invention the preparation of the catalyst includes a particular magnesium chloride support. The support is substantially free from products containing Mg-C bonds, by this it is meant that the ratio of the number of Mg-C bonds to the number of magnesium atoms in the support is lower than 0.001. The support is therefore not capable of spontaneously reducing a titanium compound.

The atomic ratio Cl/Mg of the support is substantially equal to 2. The support comprises from 80 to 99.5 mol % of magnesium dichloride and from 20 % to 0.5 mol % of compound (D). It preferably contains from 80 to 95 mol % of magnesium dichloride and from to 20 to 5 mol % of compound (D).

The electron-donor compound, (D), can be a Lewis base. It must be free from labile hydrogen and, consequently, cannot be chosen from water, alcohols or phenols. It is advantageously chosen from ethers, thioethers, sulphones, sulphoxides, phosphines, phosphoramides, amines and amides. It is preferred to employ electron-donor compounds of low complexing power in relation to magnesium chloride, such as ethers.

It has been found that the best results are obtained when the support is substantially homogeneous that is to say it is a composition in which the compound (D) is distributed substantially homogeneously throughout the magnesium chloride particle, from the core to the periphery of the latter, and not only at its periphery. As a result, to obtain such a support it is generally recommended to prepare it by a method involving the precipitation of the support.

The support gives high-performance catalysts which are especially capable of withstanding the enormous growth stresses which occur during a polymerisation reaction, particularly in a gaseous phase reaction. This particular form of the support can be obtained by a precipitation reaction carried out under carefully controlled conditions.

In addition, the support consists of spheroidal particles which have a weight-average diameter of 10 to 100 microns and preferably from 20 to 70 microns. The particles of the support have a very narrow particle size distribution, such that the ratio Dₘ/Dₙ of the weight-average diameter, Dm, to the number-average diameter, Dₙ, is lower than 3, preferably lower than 2. In prefered embodiments, the particle size distribution of these particles is such that the ratio Dₘ/Dₙ is from 1.1 to 1.5 ; there is a virtually complete absence of particles of diameter greater than 1.5 x Dₘ or smaller than 0.6 x Dₘ.

The term "spheroidal particles" is intended in this specification to mean particles which are substantially spherical in shape. Thus, if D and d denote the longer and the shorter axes of the particles respectively, the ratio D/d is for each particle close to 1, generally lower than or equal to 1.4, preferably lower than or equal to 1.3.

The specific surface of the support particles can be from 20 to 150 m²/g (BET) and the density of these particles can be approximately from 1.2 to 2.1.

The support can be prepared by reacting a dialkylmagnesium compound with an organic chloride compound in the presence of the electron-donor compound, (D). The electron donor (D) is used as a complexing agent and not as a reacting agent in this preparation. For this reason, the compound (D) cannot be chosen from compounds capable of reacting with organomagnesium compounds. The dialkylmagnesium compound chosen can be a product of formula R₁MgR₂ in which R₁ and R₂ are identical or different alkyl radicals containing from 2 to 12 carbon atoms. One of the important properties of this dialkylmagnesium compound is of being directly soluble in the hydrocarbon medium where the preparation of the support will be carried out. The organic chloride compound has a general formula R₃Cl in which R₃ is a secondary or, preferably, tertiary alkyl radical containing from 3 to 12 carbon atoms. The electron-donor compound employed (D), is preferably an ether of formula R₄OR₅ in which R₄ and R₅ are identical or different alkyl radicals containing from 1 to 12 carbon atoms.

In addition, the various reactants used for the preparation of the support can be employed in the following conditions :
- the molar ratio R₃Cl/R₁MgR₂ is from 1.9 to 2.5, preferably from 2.0 to 2.3,
- the molar ratio (D)/R₁MgR₂ is from 0.1 to 1.2, preferably from 0.3 to 0.8.

The reaction between R₁MgR₂ and R₃Cl in the presence of the electron-donor compound (D), is a precipitation reaction which is generally carried out in a liquid hydrocarbon with stirring. A person skilled in the art knows that, in this case, physical factors such as the viscosity of the medium, the method and the rate of stirring and the conditions of use of the reactants can play a major part in the form, the structure, the size and the particle size distribution of the precipitated particles, everything else being equal. However, to obtain an excellent support, characterised especially by the presence of a large quantity of the electron-donor compound,(D), it is recommended to perform the precipitation reaction at a relatively low temperature, ranging from 10 to 80°C, preferably from 15 to 50°C. It is recommended, furthermore, that the precipitation reaction should take place extremely slowly, over a period ranging from 3 to 15 hours, so as to permit the incorporation of a large quantity of the compound (D) and its uniform dispersion in the support thus formed.

The first step of the preparation of the catalyst used in the present invention consists in bringing the magnesium chloride support into contact with at least one electron-donor compound containing labile hydrogen (B). The latter can be chosen from a large number of organic electron-donor compounds capable of losing a hydrogen atom. The compound (B) is preferably chosen from alcohols or phenols. In particular, an alcohol containing from 1 to 12 carbon atoms can be employed, especially ethanol, propanol, n-butanol, n-pentanol, 2-ethylhexanol or n-hexanol. A phenol such as paracresol can also be employed. The compound (B) preferably exhibits a complexing power for magnesium chloride which is higher than that of the compound (D).

This first step can be carried out by using from 0.1 to less than 2 moles, preferably from 0.5 to 1.5 moles of the compound (B) per mole of magnesium in the support. It is preferably carried out with stirring in a liquid hydrocarbon, in particular a saturated aliphatic hydrocarbon such as n-hexane or n-heptane, or a mixture of such hydrocarbons. The contact between the support and the compound (B) can take place at a temperature ranging from 0 to 120°C, preferably from 0 to 80°C. It can last from 10 minutes to 10 hours, preferably from 30 minutes to 5 hours. In practice, the contact can be produced in various ways. For example, the compound (B) can be added to a suspension of the support kept stirred in a liquid hydrocarbon. The addition can last from 10 minutes to 5 hours, preferably from 15 minutes to 2 hours. The supension of the support in the liquid hydrocarbon can also be added to the compound (B) with stirring. The compound (B) can be employed in the pure state or in solution in a liquid hydrocarbon.

It is generally found that most of the compound (B) employed in the first step becomes fixed in the support without appreciably modifying the morphology and the particle size distribution of the support. Thus treated with the compound (B), the support can be washed one or more times with a liquid hydrocarbon. Bringing the support into contact with the compound (B) is essential in the preparation of the catalyst, because it provides the possibility of fixing in the support a relatively large quantity of organometallic compound (B) in order to fix afterwards in the support a relatively large quantity of titanium compound.

The second step of the preparation of the catalyst comprises contacting the product of the first step with at least one organometallic compound (C) which is a reducing agent for titanium. The organometallic compound can be chosen from organometallic compounds of the metals belonging to group II or III of the Periodic Classification of the elements. Organoaluminium, organomagnesium or organozinc compounds can be employed. It is preferred to use organoaluminium compounds corresponding to the general formula :

AlRₚX₃₋ₚ

in which formula R denotes an alkyl radical containing from 1 to 12 carbon atoms, X denotes a hydrogen atom or a halogen atom, such as chlorine or bromine, or an alkoxy radical containing from 1 to 10 carbon atoms, and p is a whole or fractional number ranging from 1 to 3, preferably from 2 to 3. Triethylaluminium, triisobutylaluminium, tri-n-hexylaluminium, tri-n-octylaluminium or diethylaluminium chloride can be employed. The second step can be carried out using 0.1 to 2 moles, preferably from 0.5 to 1.5 moles, of the organometallic reducing agent compound per mole of magnesium of the support. It is generally preferred to use a quantity of the organometallic reducing agent compound which is substantially equimolar to the quantity of compound (B) employed in the first step.

The support and the organometallic reducing agent compound are preferably contacted in a liquid hydrocarbon with stirring. The liquid hydrocarbon is preferably a saturated aliphatic hydrocarbon such as n-hexane or n-heptane or a mixture of saturated aliphatic hydrocarbons. The second step can be carried out at a temperature ranging from 0 to 120°C, preferably from 0 to 100°C. It can last from 10 minutes to 10 hours, preferably from 20 minutes to 5 hours. In practice, the second step can be produced in various ways. The organometallic reducing agent compound can, for example, be added to a supension of the support kept stirred in a liquid hydrocarbon. The addition can last 1 minute to 5 hours, preferably 5 minutes to 2 hours. The suspension of the support in the liquid hydrocarbon can also be added to the organometallic reducing agent compound with stirring. The organometallic reducing agent compound can be employed in the pure state or in solution in a liquid hydrocarbon.

A large part of the organometallic reducing agent compound (C) becomes fixed in the support. Nevertheless, the preparation of the catalyst comprises a third step comprising in washing the support of the second step. This third step is essential in order to remove the excess of the organometallic compound not fixed in the support. The support is washed one or more times with a liquid hydrocarbon, for example with a saturated aliphatic hydrocarbon such as n-hexane or n-heptane or a mixture of these hydrocarbons. The liquid hydrocarbon can be identical with or different from that of the support suspension. The washing or washings are preferably performed with stirring over a period which can range from 5 minutes to 2 hours, preferably from 10 minutes to 1 hour. The support can be washed at a temperature ranging from 0 to 120°C, preferably from 0 to 80°C. In practice a washing generally consists in adding the liquid hydrocarbon to the stirred suspension of the support, in keeping the mixture thus obtained stirred and then in stopping the stirring, allowing the solid support to settle and in removing a part of the supernatant liquid phase. The washing operation can be repeated a number of times, preferably until the liquid phase of the support suspension contains in solution a quantity of metal of the organometallic reducing agent compound which is less than 1 mol % relative to the quantity of titanium compound(s) to be used subsequently in step (d).

The fourth step of the catalyst preparation comprises bringing the washed solid support into contact with one or more titanium compounds which are soluble in a liquid hydrocarbon.

The titanium compound is a product which is soluble in a liquid hydrocarbon and is generally a compound in which the titanium is at its maximum valency, that is to say the valency 4. The titanium compound employed can be a compound which has the general formula Ti(OR)₄₋ₚXₚ in which R is an alkyl group containing from 1 to 12 carbon atoms, X is a halogen atom such as bromine or chlorine and p a whole or fractional number ranging from 0 to 4 and preferably from 1.5 to 2.5. Examples of these compounds are titanium tetrachloride, titanium tetraisopropoxide, titanium tetra-n-propoxide or a mixture of these compounds.

The quantity of titanium compound used to prepare the catalyst depends on the desired quantity of titanium to be fixed in the support. The quantity of titanium compound to be employed during the fourth step is generally from 0.01 to 3 moles, preferably from 0.05 to 1 mole, per mole of magnesium in the support.

During the fourth step of the preparation of the catalyst, the contact between the support and the titanium compound is preferably produced with stirring in a liquid hydrocarbon in which the titanium compounds are soluble. The liquid hydrocarbon can be a saturated aliphatic hydrocarbon, such as n-hexane or n-heptane or a mixture of these hydrocarbons. The contact generally takes place at a temperature ranging from 0 to 120°C, preferably from 20 to 100°C.

In practice the fourth step of the preparation of the catalyst can be produced in various ways. For example, it is possible to add the titanium compound to the suspension of the support kept stirred in the liquid hydrocarbon. The addition can take from 0.1 minute to 3 hours, preferably from 0.5 minute to 30 minutes, at a temperature which can range from 10 to 70°C. After the addition, the mixture thus obtained can be kept stirred for a period which can range from 10 minutes to 5 hours, preferably from 30 minutes to 3 hours, at a temperature which can range from 20 to 120°C, preferably from 30 to 100°C.

When at least two titanium compounds are brought into contact with the support, they can be added to the support simultaneously or successively one after the other or as a premix.

The titanium compounds can be used in the pure state, in the form of a liquid, or in solution in a hydrocarbon.

Although most, if not all, of the quantity of the titanium compound which is employed becomes fixed in the support, the catalyst can be washed one or more times with the aid of a liquid hydrocarbon.

The fourth step of the preparation of the catalyst consists of a precipitation of the titanium compounds in the support by a reduction reaction which changes the titanium to a valency state lower than 4. The reducing agent is the compound resulting from the contact between the organometallic reducing agent compound (C) and the support. The precipitation of the titanium compounds takes place exclusively in the support and no solid particle of a titanium compound in the reduced state is formed outside the support particles. It is observed that a catalyst which is substantially free from fine or microfine particles which are active in the polymerisation is obtained.

The essentially amorphous structure, the particle size distribution and the morphology of the support do not change during the catalyst preparation. Thus, the catalyst obtained consists of particles whose physical properties are practically identical with those of the particles of the initial support. In particular the catalyst consists of spheroidal particles which have a weight-average diameter of 10 to 100 microns, preferably of 20 to 70 microns, and a particle size distribution measured as the ratio of the weight-average diameter to the number-average diameter lower than 3, preferably lower than 2.

The advantage of the preparation of the catalyst is related to the fact that most, if not all, of the titanium compounds employed during the fourth step becomes fixed in the support. It is generally observed that more than 90 % and possibly even more than 99 % of the titanium compounds employed during the preparation becomes fixed in the support. Another characteristic of this process is that the titanium compounds are fixed homogeneously throughout the support, making the catalyst more robust during the polymerisation. The combination of these advantages is due to the fact that a particular support containing the compound (D) is employed and that this support is first of all brought into contact with the compound (B). It is observed, furthermore, that the catalyst includes a part of the organometallic reducing agent compound employed during the preparation, in a form converted by being brought into contact with the support and by the reduction reaction. The catalyst obtained by the process of the invention can contain from 2 to 12 % by weight of titanium.

The cocatalyst of the present invention is an organometallic compound of a metal of groups I to III of the Periodic Classification of the Elements. It is generally chosen from organoaluminium compounds, such as trialkylaluminium, alkylaluminium hydrides, chlorides or alcoholates or organozinc compounds such as diethylzinc.

In the process of the invention, the catalyst can advantageously be used in the form of a prepolymer in particular when polymerisation reactions are performed in the gas phase. Such prepolymer can be prepared by contacting the catalyst with ethylene, optionally mixed with one or more alpha-olefins. This contact can be carried out by known techniques, in particular in suspension in a hydrocarbon liquid, in one or more steps. It is generally carried out with stirring, at a temperature of between 10 and 100°C, preferably between 40 and 90°C and under a pressure generally higher than atmospheric pressure and lower than 2 MPa. The duration of this contact can be between 10 and 900 minutes and is such that the prepolymer obtained is in the form of a solid containing from 10 to 200 g, preferably from 20 to 100 g of polymer per millimole of titanium. The prepolymer is prepared in the presence of cocatalyst and optionally, in the presence of hydrogen.

According to the process of the invention the application of the catalyst system consists in carrying out the first polymerisation reaction in the presence of the catalyst system comprising the catalyst and the cocatalyst. The latter can be introduced into the first polymerisation reactor with the catalyst, especially in the prepolymer or separately. A subsequent polymerisation reaction is carried out in the presence of active polymer powder manufactured during the preceding polymerisation reaction. Furthermore, it can also be carried out in the presence of an additional quantity of catalyst and/or cocatalyst.

The present invention is particularly suitable for producing homopolymers of ethylene e.g. high density polyethylenes (HDPE) and copolymers of ethylene with one or more alpha-olefins e.g. linear low density polyethylenes (LLDPE). The alpha-olefin comonomer can be for example an alpha-olefin having from 3 to 8 carbon atoms. The weight content of the comonomer in copolymers is generally less than 20 %, and is often less than 12 %. Ethylene polymers produced according to the process of the invention can be used for manufacturing various articles by extrusion or blow-molding methods. More particularly these polymers can be used for manufacturing pipes or films.

According to the invention each polymerisation reactor contains a reaction mixture. The latter comprises at least ethylene. Furthermore, it can comprise hydrogen, 1-butene, 1-hexene or else another alpha-olefin.

The stages of the multistages process according to the invention can be any suitable polymerisation process such as for example slurry or gas phase processes. However, the invention is particularly suitable for multistage processes in which at least one reactor is a gas phase reactor and more particularly when the gas phase reactor is used for producing a high melt index ethylene polymer.

For a gas phase polymerisation process, gaseous reaction mixture can comprise, in addition to the olefins to be polymerised, an inert gas in a proportion which is identical to or different from one polymerisation reactor to the other. This inert gas can be chosen, in particular, from nitrogen, methane, ethane, propane, butane, pentane or a mixture of these gases. It makes it possible, in particular, appreciably to improve the removal of the heat from the polymerisation reaction.

The total pressure of a gaseous reaction mixture can be identical or different in the reactors. It is generally higher than atmospheric pressure, and in order to increase the rate of polymerisation, it can range from 0.5 to 5 MPa and preferably from 1 to 3 MPa. The temperature in each polymerisation reactor is held at a value appropriate for the desired rate of polymerisation, without, however, being too close to the softening temperature of the polymer produced. It can therefore be identical or different in the reactors and is generally chosen between 30 and 115°C and preferably from 50 to 110°C.

The average residence time of the polymers forming in each polymerisation reactor can vary within fairly wide limits. In practice, the average residence time is generally from 5 minutes to 10 hours. This average residence time depends, to a large extent, on the temperature prevailing in the polymerisation reactor.

The gas phase reactors can be chosen from apparatus of types such as fluidised bed reactors, stirred bed reactors, stirred by a mechanical stirrer, or by apparatus comprising a fluidised and stirred bed. Fluidised bed reactors are usually operated by passing through a rising stream of reaction gas at a rate of generally between 20 and 100 cm per second.

The process of the invention is preferably carried out continuously in such a way that the operating conditions of each of the polymerisation reactors are substantially constant. This operating method can be obtained in practice by circulating, in each polymerisation reactor, a gaseous reaction mixture of substantially constant characteristics, for the major part composed of the recycled gaseous reaction mixture originating from the same polymerisation reactor.

The operating conditions of the various polymerisation reactors are sufficiently independent of one another for it to be possible to operate each of these reactors under conditions differing from those of the other reactors, in particular in respect of the composition of the catalyst system, the temperature, the average residence time of the polymer and the total pressure.

Consecutive polymerisation reactors are advantageously connected by a means of a transfer device which enables the polymer powder produced in the first reactor to be transferred into the second reactor. This device is preferably chosen so as to prevent mutual contamination of the two gaseous reaction mixtures during a powder transfer. Such a transfer device is described for example in European Patent EP-B-192 427.

The process of the invention can comprise one stage during which an ethylene polymer having a high melt index is produced using a gaseous reaction mixture comprising ethylene and hydrogen and optionally 1-butene, hexene or another alpha-olefin. For this, hydrogen is generally used in an amount such that the ratio of the partial pressures between hydrogen and ethylene in the gaseous mixture is greater than or equal to 1. This ratio is often between 1 and 2. In the case of the process of the invention it is observed that the rate of formation of ethane in the reactor is particularly low, which is highly surprising, bearing in mind the large quantity of hydrogen used. Typically less than 3.5 g of ethane are formed by kg of polymer produced. When the gaseous reaction mixture comprises 1-butene, the latter is most often used in an amount such that the ratio of the partial pressures between 1-butene and ethylene in the gaseous mixture is less than or equal to 0.3. Similarly, if it contains a hexene, which can be either 4-methyl-1-pentene or 1-hexene, the ratio of the partial pressures between the hexene and ethylene is most often less than or equal to 0.3.

The ethylene polymer having a high melt index can have a relative density in the range from 0.955 to 0.970, a melt index (M.I._{2.16}) measured at 190°C under a load of 2.16 kg in the range from 10 to 250 g/10 minutes, a molecular weight distribution (i.e. the ratio of the weight-average molecular weight, Mw, to the number-average molecular weight, Mn, determined by gel permeation chromatography) in the range from 4 to 7, a transition metal content in the range from 4 to 30 ppm and a hexene or 1-butene content by weight of less than 2 %. The ethylene polymer produced has a low content of fine particles. Typically when the polymer produced has a M.I._{2.16} less than 85 g/10 minutes, less than 2 % by weight of particles have a diameter less than 125 microns ; when the M.I._{2.16} is less than 40 g/10 minutes, less than 0.7 % by weight of particles have a diameter less than 125 microns. The morphology of the polymer produced is similar to the morphology of the catalyst used and is free from agglomerates. The polymer is in the form of spheroidal particles characterised by a ratio Dₘ/Dₙ lower than 3, preferably lower than 2. It has good flow properties.

According to the invention the flowability of a polymer powder is determined with the aid of a hopper with a volume of 0.286 litre, in the shape of a conical frustum of revolution, with a vertical axis and with an apex angle pointing downwards and having a small base diameter of 10 mm, a large base diameter of 93 mm and a height of 113 mm. The hopper orifice is shut off with a glass slide. The polymer powder, which has been aerated and decompacted beforehand, is poured loosely into the hopper through the upper orifice. When the hopper is filled, the powder is skimmed level with the upper orifice of the hopper by sweeping off horizontally the excess quantity of poured powder. The glass slide shutting off the lower orifice is then removed and it is ascertained whether free flow of the powder takes place or not. The flowability of a powder is determined as the time needed to empty the hopper completely. According to this method, a powder is considered to have good flow properties when the hopper empties in less than 25 seconds, and as having poor flow properties if the hopper empties in more than 35 seconds.

The process of the invention can also comprise a stage during which an ethylene polymer having a low melt index is produced using a gaseous reaction mixture comprising ethylene and optionally hydrogen, 1-butene, a hexene or another alpha-olefin. Most often the ratio of the partial pressures between hydrogen and ethylene is less than or equal to 0.1, the ratio of the partial pressures between 1-butene and ethylene is less than or equal to 0.7, while the ratio of the partial pressures between the hexene and ethylene is less than or equal to 0.7.

The final polymer produced according to the process of the invention and withdrawn from the last reactor can have a relative density in the range from 0.915 to 0.952, a melt index, measured at 190°C under a load of 21.6 kg higher than 4 g/10 minutes, a melt index MI_{2.16} less than 4 g/10 minutes, a molecular weight distribution in the range from 5 to 35, a transition metal content in the range from 2 to 20 ppm, a 1-butene content by weight of less than 10 % and a hexene content by weight of less than 15 %. It can have a bulk density in the range of 0.30 to 0.50 g/cm³.

According to the one embodiment of the invention, the process comprises two gas phase polymerisation reactions performed in two consecutive reactors.

Most often, the polymer produced in the first polymerisation reactor represents from 20 to 80 % by weight and preferably from 30 to 70 % by weight of the final polymer withdrawn from the second polymerisation reactor. The polymer produced in the first reactor can have a high or a low melt index.

The invention also includes a single stage ethylene polymerisation process for producing ethylene polymers having a M.I._{2.16} in the range from 10 to 250 g/10 minutes with the aid of a catalyst system of the Ziegler-Natta type comprising a catalyst and a cocatalyst characterised in that the catalyst used is prepared by a process comprising:
(a) contacting a magnesium chloride support (A) with at least one electron-donor compound containing labile hydrogen (B), the magnesium chloride support containing from 80 to 99.5 mol % of magnesium dichloride and from 20 % to 0.5 mol % of an electron-donor compound free from labile hydrogen (D) and being in the form of spheroidal particles with a weight-average diameter Dₘ of 10 to 100 microns and a narrow particle size distribution such that the ratio of Dₘ to the number-average diameter Dₙ of the particles is lower than 3,
(b) contacting the product of (a) with at least one organometallic compound (C), which is a reducing agent for titanium,
(c) washing the product of (b) with a liquid hydrocarbon and,
(d) contacting the product of (c) with a solution of one or more titanium compounds in a liquid hydrocarbon.

The catalyst used in this single stage process is the same catalyst as described above which is used in the multistage polymerisation process. It can be prepared as described above. The single stage process can be carried out as the stage described above of the multistage process, during which an ethylene polymer having a high melt index is produced.

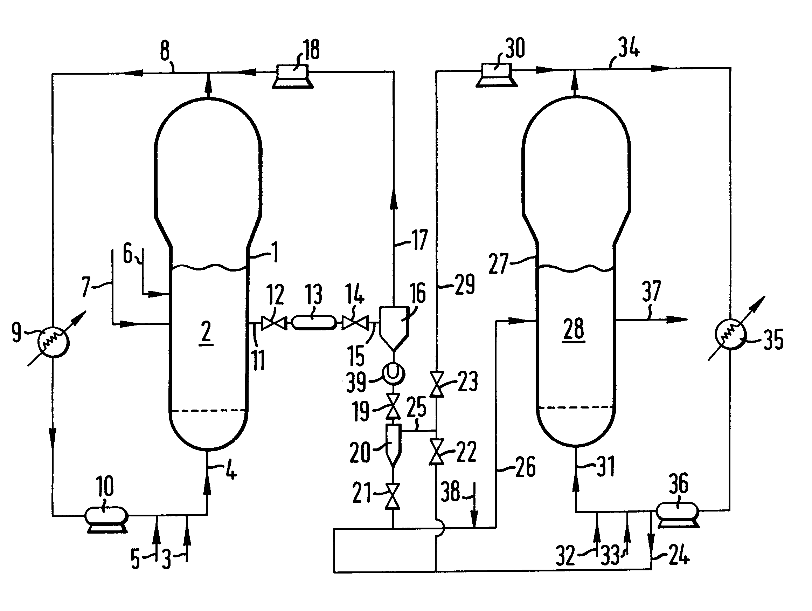

The following example, with reference to the figure which shows, diagrammatically, an apparatus comprising two fluidised bed reactors, connected to each other by a special transfer device, illustrate the present invention.

The figure shows diagrammatically an apparatus which comprises a first fluidised-bed reactor (1), containing a bed (2) of ethylene polymer being formed. The alpha-olefin or alpha-olefins to be polymerised are introduced into the reactor (1) by pipelines (3) and (4) ; a chain transfer agent such as hydrogen and/or inert gas such as nitrogen may be intoduced via line (5). The reactor (1) is fed with catalyst or catalyst system by means of the pipe (6) and optionally with cocatalyst by means of the pipe (7). The gaseous reaction mixture leaving the reactor (1) via the pipe (8) is cooled in heat exchanger (9) before being compressed in the compressor (10) and recycled into the reactor (1) via the pipe (4). A part of the polymer present in the reactor (1) leaves this reactor accompagned by gaseous reaction mixture, via the pipe (11) ; this pipe (11) is provided with a valve (12) and is connected to a discharge vessel (13). The polymer powder isolated in the discharge vessel (13) is tranferred via the outlet valve (14) and a pipe (15) into a decompression chamber (16) . A part of the gaseous reaction mixture decompressed in decompression chamber (16) may be recycled by means of a pipe (17) and a compressor (18) into the pipe (8) of the reactor (1). The polymer powder is then transferred via a full-bore valve (19) into a compression chamber (20) equipped with valves (21) and (22) which are closed and the valve (23) which is opened. The valve (19) is then closed. The polymer powder collected in the compression chamber (20) is placed under pressure by means of the gaseous reaction mixture coming from the second polymerisation reactor via the pipes (24) and (25), by opening the valve (22), the valve (23) being closed. The polymer powder thus placed under pressure is then conveyed pneumatically, after the opening of the valve (21) via the transfer line (26) into the fluidised bed reactor (27) containing at (28) a bed of the polymer powder being formed. The pipe (26) is fed with a gas stream consisting of the reaction mixture coming the second polymerisation reactor (27) via the pipe (24). An activating agent leads may be introduced into the transition line (26) via a pipe (38). After pneumatic conveyance of the polymer as far as the reactor (27), the valves (21) and (22) are closed and the compression chamber (20) is degassed by opening the valve (23) ; the gas leaving the compression chamber (20) may be recycled into the second polymerisation reactor (27) via the pipe (29) and the compressor (30). The bed of polymer particles (28) in reactor (27) is maintained in the fluidised state by means of a gas stream introduced into the reactor (27) via the pipe (31). The alpha-olefin or alpha-olefins to be polymerised are introduced into the pipe (31) via the pipe (32) ; a chain transfer agent such as hydrogen and/or an an inert gas such as nitrogen may be introduced via the pipe (33). The gaseous reaction mixture leaving the reactor (27) via the pipe (34) is cooled in a heat exchanger (35), before being compressed in the compressor (36) and recycled to the reactor (27) via the pipe (31). The polymer powder present in the reactor (27) leaves the latter via the pipe (37) which is connected to downstream processing e.g. a storage or an extruder. All the operations of the withdrawal, decompression, compression, transfer and introduction of the polymer into the reactor (27) are performed periodically.

Each fluidised bed reactor essentially comprises a vertical cylinder surmounted by a tranquillising chamber and is provided in its lower part with a fluidisation grid.

This apparatus comprises a metering device (39), communicating alternatively with the decompression chamber (19) and the compression chamber (20) ; this metering device (39) comprises a cavity making it possible to withdraw a given quantity of polymer powder from the decompression chamber (16) via a full-bore valve (19).

### Example

### a) Preparation of a magnesium chloride support

8.1 litres (40 moles) of diisoamylether were introduced at room temperature and under a nitrogen blanket into a 300-litres stainless steel reactor provided with a stirring system rotating at 135 rev/min and containing 80 moles of dibutylmagnesium in solution in 133.3 litres of hexane. 19.3 litres (176 moles) of t-butyl-tertiary-chloride were introduced over 12 hours while the reactor was maintained at 30°C. The mixture was then kept stirred for 2 hours. The product obtained was washed a number of times with 130 litres of hexane. 76 moles of magnesium chloride were thus obtained, which was in the form of spherical particles with a weight-average diameter Dₘ of 28 microns and with a narrow particle size distribution such that the ratio of the weight-average and number-average diameters was 1.5, and containing 7.1 mol % of diisoamyl ether.

### b) Preparation of a catalyst

167 litres of hexane containing 55 moles of magnesium chloride as prepared above were introduced under nitrogen atmosphere into a 300-litres stainless steel reactor provided with a stirring system rotating at 166 rev/min.

55 litres of hexane containing 55 moles of absolute ethanol were then introduced over an hour while the reaction temperature was maintained at 25°C. The suspension was kept stirred for 1 hour at 25°C. After separation and removal of the supernatant liquid phase the solid obtained was washed 4 times with 130 litres of hexane at a temperature of 25°C. The volume of suspension was restored to 167 litres.

55 litres of hexane containing 55 moles of triethylaluminium were then introduced over 1 hour at a temperature of 50°C. After maintaining at 50°C for 1 hour and decanting, the solid obtained was washed 3 times with 130 litres of hexane at a temperature of 50°C, then 7 times with 130 litres of hexane at a temperature of 25°C. The volume of suspension was restored to 167 litres.

13.75 litres of hexane containing 5.5 moles of titanium tetrachloride and 13.75 litres of hexane containing 5.5 moles of titanium tetra-n-propoxide were introduced over 2 h 30 min while the temperature was maintained at 25°C. The mixture was heated to and maintained at 80°C for an hour and then after decanting the solid obtained was washed 5 times with 130 litres of hexane at 80°C, then 5 times with 130 litres of hexane at 25°C. The solid collected constitutes the solid catalyst and corresponds to the following analysis (molar ratios) :
Total Ti/Magnesium : 0.20
Ti(III)/total Ti : 0.56
Al/Mg : 0.077
Cl/Mg : 2.37
Weight content of titanium : 7.2 %

### c) Preparation of a prepolymer

500 litres of n-hexane, 1 mole of tri-n-octylaluminium and a quantity of catalyst prepared previously containing 1 mole of titanium were introduced into a 1.5-m³ stainless steel reactor provided with a stirring device rotating at 750 revolutions per minutes, maintained under nitrogen atmosphere and heated to 70°C. Hydrogen was then introduced into it so as to obtain a partial pressure of hydrogen of 0.1 MPa, and then ethylene at a steady flow rate of 15 kg/h for 6 hours 40 minutes. At the end of this time the reactor was degassed and its contents were transferred to a mechanically stirred evaporator where the n-hexane was evaporated off by circulating nitrogen at 60°C. 100 kg of a prepolymer were thus obtained ready for use, containing 100 g of polyethylene per millimole of titanium.

### d) Manufacture of an ethylene polymer having a relative density of 0.950

The process was carried out in an apparatus comprising two different fluidised bed reactors connected to one another by means of a transfer device constructed in accordance with the figure.

The first reactor comprised a cylindrical part with a vertical axis, 45 cm in diameter and 7.2 m in height. The second reactor comprised a cylindrical part with a vertical axis, 90 cm in diameter and 6 m in height.

The first reactor contained a fluidised bed of particles of ethylene polymer being formed, which had a height of 1.9 m and was traversed by an upward stream of a first reaction gas mixture at an upward velocity of 50 cm/s, a total pressure of 1.70 MPa and a temperature of 90°C, measured at the exit of the disengagement section.

The first reaction gas mixture comprised, on a volume basis, 20 % of ethylene, 32 % of hydrogen, 1 % of ethane and 47 % of nitrogen. As a result, the ratio of the partial pressures of hydrogen and ethylene was 1.6. The reactor was fed with the aid of the prepolymer feed conduit with the prepolymer prepared previously, at a rate of 260 g/hour. It was also fed, separately, with triethylaluminium in a quantity such that in the reactor the molar ratio of the aluminium added to the titanium of the catalyst was 7.5.

The polymer being formed in this first reactor was produced at a rate of 25 kg/hour and at a relative density equal to 0.965, a titanium content of 5 ppm and a melt index, measured at 190°C under a 2.16 kg load, of 80 g/10 minutes.

This polymer was drawn off from the first reactor at a rate of 25 kg/hour and was introduced at the same rate into the second reactor by means of the transfer device. The introduction of polymer into the second reactor takes place by means of the polymer feed conduit. In the polymer drawn off from the first reactor the fine polymer particles which have a diameter smaller than 125 microns represent less than 2 % of all the particles constituting this polymer.

The second reactor contained a fluidised bed of particles of ethylene polymer being formed which had a height of 1.5 m and was traversed by an upward stream of a second reaction gas mixture at an upward velocity of 50 cm/s, a total pressure of 1.7 MPa and a temperature of 70°C, measured at the exit of the disengagement section. This second reaction mixture comprises, on a volume basis, 35 % of ethylene, 4.5 % of 1-butene, 0.1 % of hydrogen and 60.4 % of nitrogen. As a result, the ratio of the partial pressures of hydrogen and ethylene was approximately 0.003 and the ratio of the partial pressures of 1-butene and ethylene was approximately 0.13. Furthermore, this second reactor was fed with tri-ethylaluminium in a quantity such that in the reactor the molar ratio of the added aluminium and the titanium was 7.5.

The final polymer produced in the second reactor was drawn off at a rate of 50 kg/hour had a relative density of 0.950, a weight content of 1-butene of 1.4 %, a titanium content of 2.5 ppm, a melt index, measured at 190°C under a 21.6 kg load, of 8 g/10 minutes, and a molecular weight distribution, measured by the ratio of the weight-average molecular weight Mw and the number-average molecular weight, Mn, of 20.

## Claims

1. A multistage polymerisation process for producing ethylene polymers, performed in two or more consecutive polymerisation reactors, with the aid of a catalyst system of the Ziegler-Natta type comprising a catalyst and a cocatalyst, characterised in that the catalyst used is prepared by a process comprising :
(a) contacting a magnesium chloride support (A) with at least one electron-donor compound containing labile hydrogen (B), the magnesium chloride support containing from 80 to 99.5 mol % of magnesium dichloride and from 20 % to 0.5 mol % of an electron-donor compound free from labile hydrogen (D) and being in the form of spheroidal particles with a weight-average diameter, Dₘ, of 10 to 100 microns and a narrow particle size distribution such that the ratio of Dₘ to the number-average diameter, Dₙ, of the particles is lower than 3,
(b) contacting the product of (a) with at least one organometallic compound (C), which is a reducing agent for titanium,
(c) washing the product of (b) with a liquid hydrocarbon and,
(d) contacting the product of (c) with a solution of one or more titanium compounds in a liquid hydrocarbon.

2. A process according to Claim 1, characterised in that the electron-donor compound free from labile hydrogen (D), is chosen from ethers, thioethers, sulphones, sulphoxides, phosphines, phosphoramides, amines and amides.

3. A process according to Claim 1 or 2, characterised in that the electron-donor compound containing labile hydrogen, (B), is chosen from alcohols and phenols.

4. A process according to any one of Claimsl to 3, characterised in that the organometallic reducing agent compound (C) is chosen from organoaluminium, organomagnesium and organozinc compounds.

5. A process according to any one of Claims 1 to 4, characterised in that the titanium compound is of formula Ti(OR)₄₋ₚXₚ in which R is an alkyl group containing from 1 to 12 carbon atoms, X is a halogen atom such as bromine or chlorine and p is a whole or fractional number ranging from 0 to 4.

6. A process according to any one of Claims 1 to 5, characterised in that it comprises one stage using a gaseous reaction mixture which comprises ethylene and hydrogen in an amount such that the ratio of the partial pressures of hydrogen to ethylene is greater than or equal to 1.

7. A process according to Claim 6, characterised in that the polymer produced during the stage has a M.I._{2.16} in the range from 10 to 250 g/10 minutes.

8. A process according to Claim 6 or 7, characterised in that the density of the polymer produced is in the range from 0.955 to 0.970.

9. A process according to any one of Claims 1 to 8, characterised in that it comprises one stage using a gaseous reaction mixture which comprises ethylene and hydrogen in an amount such that the ratio of the partial pressures of hydrogen to ethylene is less than or equal to 0.1.

10. A single stage polymerisation process for producing an ethylene polymer having a M.I._{2.16} in the range from 10 to 250 g/10 minutes with the aid of a catalyst system of the Ziegler-Natta type comprising a catalyst and a cocatalyst characterised in that the catalyst used characterised in that he catalyst used is prepared by a process comprising:
(a) contacting a magnesium chloride support (A) with at least one electron-donor compound containing labile hydrogen (B), the magnesium chloride support containing from 80 to 99.5 mol % of magnesium dichloride and from 20 % to 0.5 mol % of an electron-donor compound free from labile hydrogen (D) and being in the form of spheroidal particles with a weight-average diameter Dₘ of 10 to 100 microns and a narrow particle size distribution such that the ratio of Dₘ to the number-average diameter Dₙ of the particles is lower than 3,
(b) contacting the product of (a) with at least one organometallic compound (C), which is a reducing agent for titanium,
(c) washing the product of (b) with a liquid hydrocarbon and,
(d) contacting the product of (c) with a solution of one or more titanium compounds in a liquid hydrocarbon.

11. An ethylene polymer having a relative density in the range from 0.955 to 0.970, a melt index M.I._{2.16} in the range from 10 to 250 g/10 minutes and which consists of spheroidal particles having a ratio, Dm/Dn, lower than 3.
